# EUROPÄISCHE PATENTSCHRIFT

(11) **EP 2 718 582 B1**
(45) Veröffentlichungstag und Bekanntmachung des Hinweises auf die Patenterteilung: **27.09.2017**
(21) Anmeldenummer: 12723620.6
(22) Anmeldetag: 24.05.2012
(51) Int. Cl.: F16D 55/226

(54) **SCHEIBENBREMSE, INSBESONDERE FÜR NUTZFAHRZEUGE**
DISK BRAKE, IN PARTICULAR FOR UTILITY VEHICLES
FREIN À DISQUE, EN PARTICULIER POUR VÉHICULES UTILITAIRES

(30) Priorität: 10.06.2011 DE 102011103963
(43) Veröffentlichungstag der Anmeldung: 16.04.2014
(73) Patentinhaber: Wabco Radbremsen GmbH, 68229 Mannheim (DE)
(72) Erfinder: STUMPF, Martin, 68623 Lampertheim (DE); HENNING, Paul, 68723 Schwetzingen (DE)
(74) Vertreter: Leinweber & Zimmermann
(86) Internationale Anmeldenummer: PCT/EP2012/002230
(87) Internationale Veröffentlichungsnummer: WO 2012/167875

(56) Entgegenhaltungen:
- EP-A2- 1 801 447
- DE-A1- 19 846 834
- DE-B3-102007 024 578
- US-A1- 2006 054 423

## Beschreibung

Die Erfindung betrifft eine Scheibenbremse, insbesondere für Nutzfahrzeuge, nach dem Oberbegriff von Anspruch 1, DE 10 2007 024 578 B3.

Weitere Scheibenbremsen sind bekannt aus der DE 10 2004 002 571 A1.

Einschlägige Bremsen für Nutzfahrzeuge weisen in der Regel eine im Bremssattel angeordnete pneumatische oder elektromechanische Zuspanneinrichtung auf. Der Bremssattel ist gegenüber dem Bremsenträger entlang einer Bremsenachse mittels Führungseinrichtungen axial verschiebbar.

Der Bremssattel ist in der Regel so ausgeführt, daß er rahmenartig die Bremsscheibe umgreift. Der Bremsenträger umgreift ebenfalls rahmenartig die Bremsscheibe und weist zuspannseitig und felgenseitig je einen Belagschacht auf, der unter anderem durch einander gegenüberliegende Bremsenträgerhörner begrenzt ist. Zwischen den Bremsenträgerhörnern liegen jeweils Verbindungsstreben, die auch als Verbindungsjoch ausgestaltet sein können.

In der Regel ist ein Bremsbelagniederhaltesystem vorgesehen, um die Bremsbeläge in radialer und/oder tangentialer Richtung in ihren Lagerschächten vorzuspannen.

Da Scheibenbremsen, insbesondere Nutzfahrzeugscheibenbremsen, in eingebautem Zustand weitestgehend im Bereich der Radfelge liegen, erstreckt sich insbesondere der felgenseitige Bremsbereich bis nahe an das Felgenbett, so daß die entsprechenden Bereiche des Bremssattels und des Bremsenträgers von der Rotationskontur der Radfelge umgeben sind.

Um den Anforderungen an die hier sehr begrenzten Einbauverhältnisse gerecht zu werden, ist der felgenseitige Bremssattelschenkel so ausgebildet, daß sich die felgenseitigen Bremsenträgerhörner in taschenartige Ausnehmungen in dem Bremssattel erstrecken, die in Richtung zur Bremsscheibe und nach radial innen offen sind. Die "taschen" liegen also beidseits desjenigen Sattelwandbereiches, der gegen den jeweiligen Bremsbelag drückt.

Charakteristisch für Gleitsattelscheibenbremsen ist die axiale Verschiebung des Bremssattels entlang der Bremsenachse gegenüber dem als Festteil dienenden Bremsenträger infolge Bremsbelag- und/oder Bremsscheibenverschleißes. Dementsprechend müssen die "taschen" auch eine Größe/Länge haben, die ein ausreichendes "Eintauchen" der jeweiligen Bremsenträgerhörner über den gesamten Sattelverschiebeweg ermöglicht.

Damit ergibt sich im Falle neuer Bremsbeläge und/oder einer neuen Bremsscheibe ein vergleichsweise großer Hohlraum zwischen den Innenwänden der Satteltaschen einerseits und den Bremsträgerhörnern andererseits. Dieser Hohlraum ist insbesondere nach radial innen offen. In diesem Hohlraum, der insofern einen ungeschützten Sattelbereich darstellt, können sich durch Umgebungs- und Umwelteinflüsse nachteilig Ablagerungen, wie etwa Steine, Eis, Geröll, Sand usw. ansammeln/festsetzen, die einer verschleißbedingten Verschiebung des Bremssattels bezüglich des Bremsenträgers entgegenstehen. Schlägt der Bremssattel an solchen Ablagerungen an, kann er nicht mehr zum Ausgleich des Verschleißes verschoben werden. Die Bremse fällt aus. Gleichfalls ist damit auch nachteilig die Zuspann- und Lösehubfunktion mit der erforderlichen Sattelbewegung blockiert.

Der Erfindung liegt die Aufgabe zugrunde, die Bremse der eingangs genannten Art derart weiterzubilden, daß auch unter extremen Umgebungs- und Einflußbedingungen die Bremsenfunktion sichergestellt ist und die Gebrauchseigenschaften verbessert werden. Dabei soll die Kompaktheit der Bremse erhalten bleiben.

Erfindungsgemäß wird die gestellte Aufgabe mit einer Scheibenbremse nach Anspruch 1 gelöst.

So kann beispielsweise vorgesehen sein, daß der felgenseitige Bereich des Bremsenträgers sich entlang der Bremsenachse bei einer Bestückung mit neuen Bremsbelägen - also bei der Ausgangsstellung des Gleitsattels - mit seiner in dieser Richtung verlaufenden Struktur den unteren, zur Bremsenachse weisenden Bereich des Sattelschenkels im wesentlichen da überdeckt, wo die Satteltaschen bzw. Ausnehmungen zum "Eintauchen" der Bremsenträgerhörner liegen.

Erfindungsgemäß bevorzugt liegt der Ansatz auf der Felgenseite des Bremsenträgers.

Erfindungsgemäß ist vorgesehen, daß der Ansatz in jedem Betriebszustand in Richtung parallel zur Richtung der Verschiebung des Bremssattels bezüglich des Bremsenträgers über die Innenfläche der die radial innen liegende Öffnung der Ausnehmung begrenzenden Wand hinausragt, bevorzugt auch über die Außenfläche der Wand.

Dadurch, daß der Ansatz über die Innenfläche der Wand der Ausnehmung hinausragt, wird sichergestellt, daß er die Ausnehmung zuverlässig abdeckt. Ragt er auch über die Außenfläche der die Ausnehmung begrenzenden Wand hinaus, so ragt er weiter in die Felge hinein als der Bremssattel und kann daher als Abstreifer dienen, um die Felge von Verschmutzungen oder dergleichen frei zu halten bzw. zu befreien, bzw. ein Eindringen von Fremdkörpern in die Ausnehmung/en zu verhindern.

Nach dieser Ausgestaltung der Erfindung ist der Zustand der Überdeckung der taschenartigen Ausnehmung mit dem Ansatz bis hin zu einem gewissen Überstand der Trägerstruktur gegenüber der Sattelstruktur bereits bei neuen Bremsbelägen vorhanden. Da somit flächenmäßig die Trägerstruktur (Festteil) die Sattelstruktur überdeckt, ist die Satteltasche von der Ausgangsstellung (neue Bremsbeläge) bis zur Endstellung (verschlissene Bremsbeläge) wirkungsvoll gegen die oben genannten Einlagerungen geschützt, so daß selbst bei extremen Einsatzbedingungen die Sattelverschiebung unbeeinträchtigt bleibt. Dies ist insbesondere bei Fahrzeugen im Offroad-Einsatz von großem Vorteil.

Erfindungsgemäß bevorzugt ist vorgesehen, daß eine Hüllfläche des Ansatzes in einer Draufsicht auf den Bremsenträger eine Hüllfläche des Bremssattels zumindest abschnittsweise überdeckt und/oder die Hüllfläche des Bremssattels zumindest abschnittweise übersteht.

Diese Ausgestaltung erlaubt es wiederum dem Ansatz, als Abstreifer innerhalb der Felge zu fungieren.

Nach einer weiter bevorzugten Ausführungsform der Erfindung ist ein Spalt zwischen dem Ansatz und der die radial innen liegende Öffnung der Ausnehmung begrenzenden Wand vorgesehen.

Mit anderen Worten gleitet nach dieser Ausführungsform der Sattel nicht auf dem Ansatz, damit die Verschieblichkeit des Sattels durch den Ansatz nicht beeinträchtigt wird.

Nach einer weiter bevorzugten Ausführungsform der Erfindung ist der Ansatz einstückig mit dem ersten Bremsenträgerhorn und/oder mit einem das erste Bremsenträgerhorn mit einem zweiten Bremsenträgerhorn verbindenden Verbindungsjoch ausgebildet.

Der Ansatz erhält damit eine weitere Funktion, nämlich eine Verstärkung des Verbindungsjochs, so daß der Bremsenträger insgesamt verwindungssteifer und widerstandsfähiger ist. Darüber hinaus muß bei dieser Ausgestaltung der Ansatz nicht als Zusatzteil separat angebaut werden, wodurch zum einen die Herstellungskosten gesenkt und zum anderen eine Materialschwächung des Bremsenträgers beispielsweise durch Verschraubungen oder dergleichen vermieden ist.

Insgesamt können dem Ansatz also insgesamt drei Funktionen zukommen, nämlich die Abdeckung der taschenartigen Ausnehmung zum Schutze gegen eindringenden Schmutz, das Abstreifen bzw. Abweisen von Schmutz aus dem Innenbereich der Radfelge und die Verbesserung der Stabilität des Verbindungsjochs. Insbesondere letztgenannte Funktion ist gerade bei Nutzfahrzeugen für die Einleitung von höheren Bremsumfangsmomenten wünschenswert.

Wie bereits oben ausgeführt, ist es erfindungsgemäß weiter bevorzugt vorgesehen, daß der Bremsenträger und/oder der Bremssattel die Bremsscheibe rahmenartig umgreift/umgreifen.

Der Bremssattel weist erfindungsgemäß weiter bevorzugt eine Öffnung zum Montieren/Demontieren des Bremsbelages auf.

Vorteilhafterweise kann nach der Erfindung weiter vorgesehen sein, daß ein felgenseitiger und/oder ein zuspannseitiger Bremsbelag in Umfangsrichtung der Bremsscheibe, tangential bezüglich der Bremsscheibe und/oder radial bezüglich der Bremsscheibe abgestützt ist/sind.

Insbesondere die vorgenannten Abstützungen werden erfindungsgemäß vorteilhafterweise durch einen U-förmigen Belagschacht für einen felgenseitigen Bremsbelag und/oder einen U-förmigen Belagschacht für einen zuspannseitigen Bremsbelag realisiert.

Dabei bilden die bereits oben erwähnten Bremsenträgerhörner vorteühafterweise die beiden Schenkel des "U".

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine perspektivische Ansicht von unten auf eine einschlägige Bremse mit Gleitsattel und Bremsenträger nach dem Stand der Technik,
- Figur 2: eine Draufsicht von oben auf die Bremse nach Figur 1,
- Figur 3: eine perspektivische Ansicht von unten auf einen Gleitsattel und einen Bremsenträger einer Bremse nach einem Ausführungsbeispiel der Erfindung,
- Figur 4: eine Draufsicht auf eine Bremse mit dem Bremssattel und dem Bremsenträger nach Figur 3 und
- Figur 5: eine Seitenansicht der Bremse nach Figur 4.

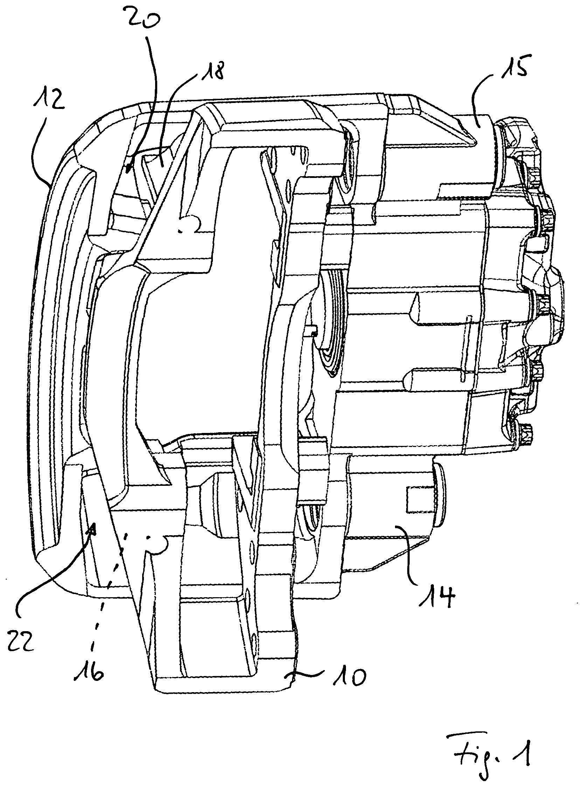

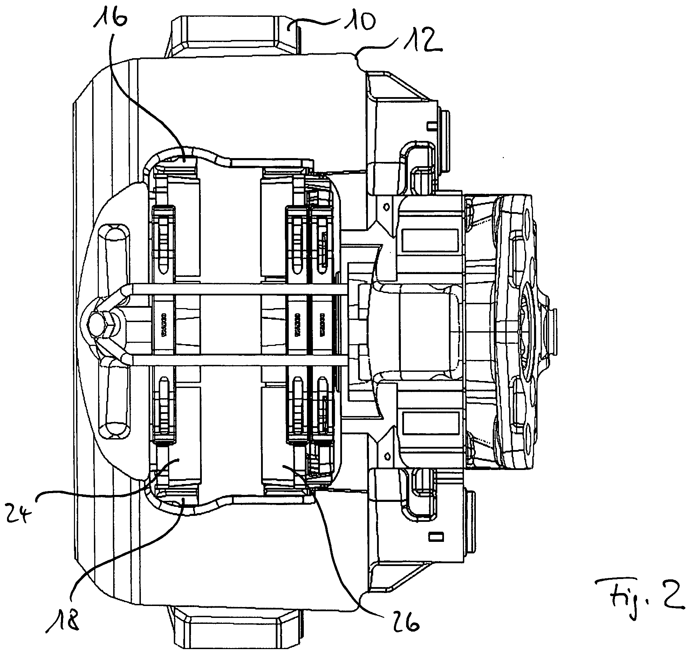

Zu der in den Figuren 1 und 2 dargestellten herkömmlichen Bremse gehören ein Bremsenträger 10 und ein Bremssattel 12, der mittels Sattelführungen 14, 15 verschieblich auf dem Bremsenträger 10 gehalten ist. Zwei felgenseitige Bremsenträgerhörner 16 und 18 sind einstückig mit dem Bremsenträger 10 ausgebildet. Sie ragen in taschenartige Ausnehmungen 20 bzw. 22 des Bremssattels 12 hinein. Zwischen den felgenseitigen Bremsenträgerhörnern 16 und 18 erstreckt sich ein Verbindungsjoch.

Die Figuren 1 und 2 zeigen einen Betriebszustand, in dem Bremsbeläge 24 und 26 neu, d.h. noch nicht verschlissen sind. Die Ausnehmungen 20 und 22 werden in diesem Betriebszustand nicht von den Bremsenträgerhörnern 16 und 18 bis an ihr felgenseitiges Ende hin ausgefüllt. Vielmehr ist zwischen den jeweiligen felgenseitigen Enden der Hörner 16 und 18 und der felgenseitigen Begrenzungswand der Ausnehmungen 20 und 22 ein Abstand freigelassen, der sich mit zunehmendem Verschleiß der Bremsbeläge 24 und 26 und damit verbundener Verschiebung des Bremssattels 12 bezüglich des Bremsenträgers 10 allmählich verringert.

Wie insbesondere Figur 1 zu entnehmen ist, sind die Ausnehmungen 20 und 22 nach radial innen bzw. zum Bremsenträger 10 hin offen, so daß Schmutz eindringen kann.

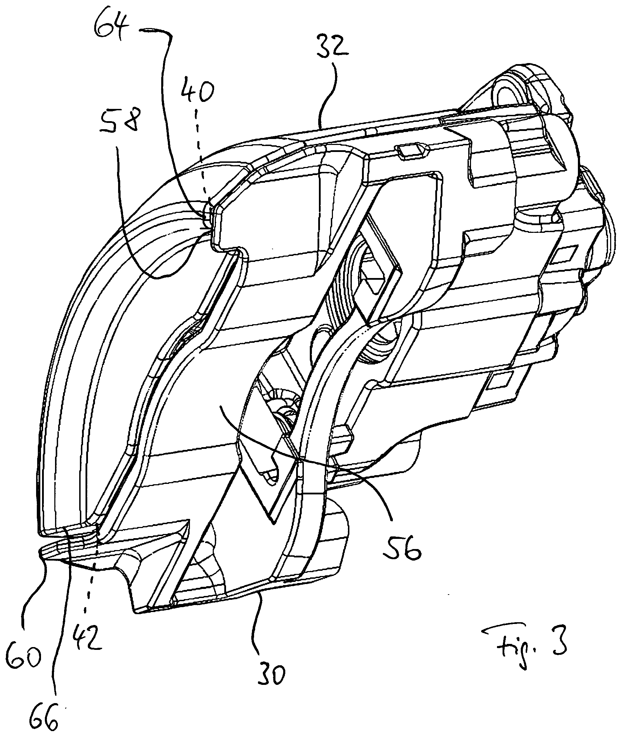

Anders bei dem in den Figuren 3 bis 5 dargestellten Ausführungsbeispiel der Erfindung:
Zu dem erfindungsgemäßen Ausführungsbeispiel gehören ein Bremsenträger 30 und ein Bremssattel 32, der mittels Sattelführungen 34, 35 auf dem Bremsenträger 30 verschieblich ist. Die Verschieblichkeit liegt parallel zu einer Bremsenachse A vor. Felgenseitige Bremsenträgerhörner tragen die Bezugszahlen 36 bzw. 38. Wie bei dem Stand der Technik ragen sie in taschenartige Ausnehmungen 40 bzw. 42 des Bremssattels 32 hinein. Dabei sind die Ausnehmungen 40, 42 wie die Ausnehmungen 20, 22 ausgestaltet.

Zwei Bremsbeläge sind mit den Bezugszahlen 44 bzw. 46 bezeichnet. Sie werden über eine Montageöffnung 48 in dem Bremssattel 32 montiert bzw. demontiert. Ein Niederhaltebügel 50 dient zum Vorspannen der Bremsbeläge 44 und 46 zumindest in Radialrichtung nach innen. Die Bremsbeläge 44 und 46 sind jeweils in U-förmigen Führungen/Halterungen des Bremsenträgers 30 geführt bzw. gehalten, wobei die felgenseitigen Bremsenträgerhörner 36 und 38 der beiden Schenkel des "U" zum Halten und Führen des Bremsbelags 44 in Umfangs- und Tangentialrichtung dienen. Zuspannseitige Bremsenträgerhörner 52 und 55 dienen dem gleichen Zwecke wie die Bremsenträgerhörner 36 und 38, jedoch für den Bremsbelag 46. Auch radial sind die Bremsbeläge 44 und 46 in den U-förmigen Schächten abgestützt.

Die felgenseitigen Bremsenträgerhörner 36 und 38 sind einstückig mit einem Verbindungsjoch 56 ausgeführt. Ebenfalls einstückig mit dem Verbindungsjoch 56 sind Ansätze 58 und 60 ausgebildet. Die Ansätze 58 und 60 überdecken die taschenartigen Ausnehmungen 40 und 42 in jedem Betriebszustand der Bremse, d.h. insbesondere dann, wenn neue Bremsbeläge eingesetzt worden sind. So kann Schmutz und dergleichen nicht von radial innen her in die Ausnehmungen 40, 42 eindringen, und zwar auch dann nicht, wenn die Bremsbeläge neu sind und der Bremssattel 32 im Sinne einer Vergrößerung des Abstands zwischen den felgenseitigen Bremsenträgerhörnern 36 und 38 einerseits und den felgenseitigen Innenwänden der Ausnehmungen 40 und 42 andererseits verschoben ist.

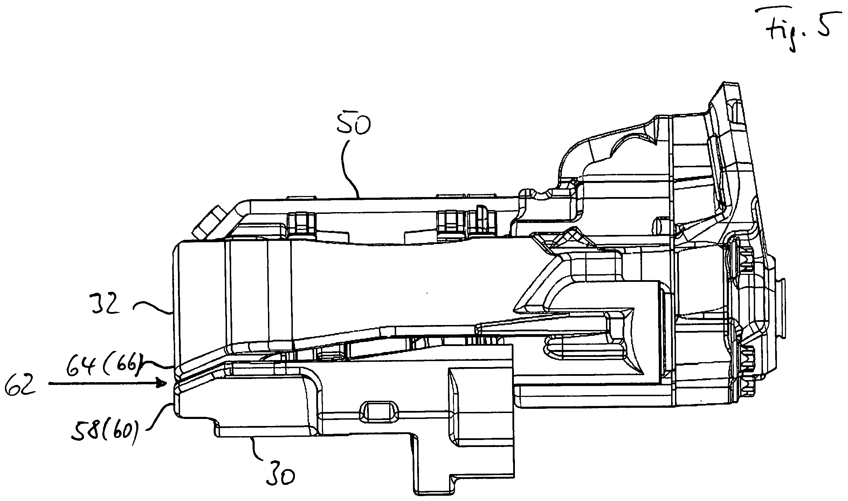

Zwischen den Ansätzen 58 und 60 und den die radial innen liegenden Öffnungen der Ausnehmungen begrenzenden Wänden 64, 66 liegt ein in Figur 5 mit dem Bezugszeichen 62 bezeichneter Spalt. Dadurch ist sichergestellt, daß die Verschieblichkeit des Bremssattels 32 auf dem Bremsenträger 30 durch die Ansätze 58 und 60 nicht beeinträchtigt ist. Der Spalt ist aber andererseits klein genug, um das Eindringen größerer Schmutzpartikel zu verhindern. Er liegt im Bereich von 1 mm bis 10 mm, in dem dargestellten Ausführungsbeispiel sind es (entsprechend dem dargestellten Maßstab) 3 mm.

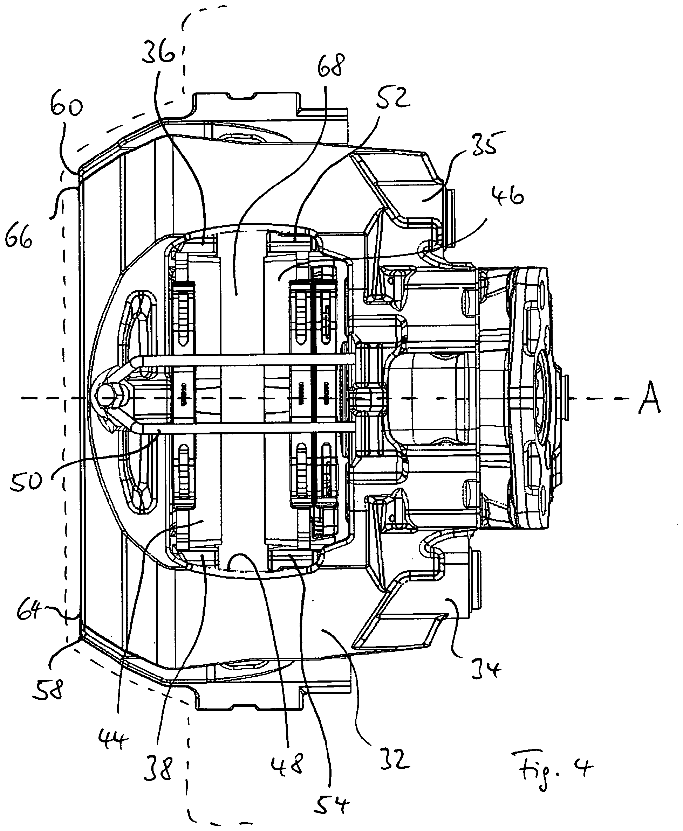

Wie insbesondere Figur 4 zu entnehmen ist, stehen die Ansätze 58 und 60 in Figur 4 oben und unten über die Außenkontur des Bremssattels 32 und insbesondere der die Ausnehmungen 40 und 42 begrenzenden Wände 64 und 66 über. D.h., die Hüllflächen der Ansätze 58 und 60 stehen über die Hüllfläche des Bremssattels 32 bzw. die Hüllflächen der die Ausnehmungen 40 und 42 begrenzenden Wände 64 und 66 über.

Diese Überstände sorgen nicht nur für eine verläßliche Abdeckung der Ausnehmungen 40 und 42, sondern dienen auch als Abstreifer für die Felge, deren Hüllkurve schematisch (gestrichelt) angedeutet ist.

Schließlich sei noch darauf hingewiesen, daß sowohl der Bremsenträger 30 als auch der Bremssattel 32 die Bremsscheibe 68 rahmenartig umgreifen, weshalb sie jeweils einen felgenseitigen und einen zuspannseitigen Abschnitt aufweisen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse, insbesondere für Nutzfahrzeuge, mit
einem Bremsbelag (44),
einem Bremsenträger (30) mit einem ersten Bremsenträgerhorn (38) zum Abstützen des Bremsbelags in Umfangsrichtung der Bremsscheibe (68) und
einem verschieblich bezüglich des Bremsenträgers gehaltenen Bremssattel (32) mit einer zumindest nach radial innen offenen taschenartigen Ausnehmung (40) zum Aufnehmen des ersten Bremsenträgerhorns und
einem Ansatz (58) an dem Bremsenträger zum Abdecken der Ausnehmung nach radial innen,
**dadurch gekennzeichnet, daß**
der Ansatz (58) in jedem Betriebszustand in Richtung parallel zur Richtung der Verschiebung des Bremssattels (32) bezüglich des Bremsenträgers (30) über die Innenfläche der die radial innen liegende Öffnung der Ausnehmung (40) begrenzenden Wand (64) hinausragt.

2. Scheibenbremse nach Anspruch 1, **dadurch gekennzeichnet, daß** der Ansatz (58) in jedem Betriebszustand in Richtung parallel zur Richtung der Verschiebung des Bremssattels (32) bezüglich des Bremsenträgers (30) über die Außenfläche der die radial innen liegende Öffnung der Ausnehmung (40) begrenzenden Wand (64) hinausragt.

3. Scheibenbremse nach Anspruch 1 oder 2, **dadurch gekennzeichnet, daß** der Ansatz (58) auf der Felgenseite des Bremsenträgers (30) liegt.

4. Scheibenbremse nach einem der vorangehenden Ansprüche, **dadurch gekennzeichnet, daß** eine Hüllfläche des Ansatzes (58) in einer Draufsicht auf den Bremsenträger (30) eine Hüllfläche des Bremssattels (32) zumindest abschnittweise überdeckt und/oder über die Hüllfläche des Bremssattels zumindest abschnittweise übersteht.

5. Scheibenbremse nach einem der vorangehenden Ansprüche, **gekennzeichnet durch** einen Spalt (62) zwischen dem Ansatz (58) und der die radial innen liegende Öffnung der Ausnehmung (40) begrenzenden Wand (64).

6. Scheibenbremse nach einem der vorangehenden Ansprüche, **dadurch gekennzeichnet, daß** der Ansatz (58) einstückig mit dem ersten Bremsenträgerhorn (38) und/oder mit einem das erste Bremsenträgerhorn mit einem zweiten Bremsenträgerhorn (36) verbindenden Verbindungsjoch (56) ausgebildet ist.

7. Scheibenbremse nach einem der vorangehenden Ansprüche, **dadurch gekennzeichnet, daß** der Bremsenträger (30) und/oder der Bremssattel (32) die Bremsscheibe (68) rahmenartig umgreift/umgreifen.

8. Scheibenbremse nach einem der vorangehenden Ansprüche, **gekennzeichnet durch** eine Öffnung (48) in dem Bremssattel (32) zum Montieren/Demontieren des Bremsbelages (44).

9. Scheibenbremse nach einem der vorangehenden Ansprüche, **dadurch gekennzeichnet, daß** ein felgenseitiger und/oder ein zuspannseitiger Bremsbelag (44, 46) in Umfangsrichtung der Bremsscheibe (68) tangential bezüglich der Bremsscheibe und/oder radial bezüglich der Bremsscheibe abgestützt ist/sind.

10. Scheibenbremse nach einem der vorangehenden Ansprüche, **gekennzeichnet durch** einen U-förmigen Belagschacht für einen felgenseitigen Bremsbelag (44) und/oder einen U-förmigen Belagschacht für einen zuspannseitigen Bremsbelag (46).

## Claims

1. Disc brake, in particular for commercial vehicles, having
a brake lining (44),
a brake carrier (30) with a first brake carrier horn (38) for supporting the brake lining in the circumferential direction of the brake disc (68), and
a brake calliper (32) which is held displaceably with regard to the brake carrier, with an at least radially inwardly open pocket-like recess (40) for receiving the first brake carrier horn, and
an attachment (58) on the brake carrier for covering the recess radially to the inside,
**characterized in that**,
in every operating state, the attachment (58) protrudes beyond the inner face of the wall (64) which delimits the radially inner opening of the recess (40), in the direction parallel to the direction of the displacement of the brake calliper (32).

2. Disc brake according to Claim 1, **characterized in that**, in every operating state, the attachment (58) protrudes beyond the outer face of the wall (64) which delimits the radially inner opening of the recess (40), in the direction parallel to the direction of the displacement of the brake calliper (32).

3. Disc brake according to Claim 1 or 2, **characterized in that** the attachment (58) lies on the rim side of the brake carrier (30).

4. Disc brake according to one of the preceding claims, **characterized in that**, in a plan view of the brake carrier (30), an enveloping surface of the attachment (58) covers an enveloping surface of the brake calliper (32) at least in sections and/or projects beyond the enveloping surface of the brake calliper at least in sections.

5. Disc brake according to one of the preceding claims, **characterized by** a gap (62) between the attachment (58) and the wall (64) which delimits the radially inner opening of the recess (40).

6. Disc brake according to one of the preceding claims, **characterized in that** the attachment (58) is configured in one piece with the first brake carrier horn (38) and/or with a connecting yoke (56) which connects the first brake carrier horn to a second brake carrier horn (36).

7. Disc brake according to one of the preceding claims, **characterized in that** the brake carrier (30) and/or the brake calliper (32) reach/reaches around the brake disc (68) in a frame-like manner.

8. Disc brake according to one of the preceding claims, **characterized by** an opening (48) in the brake calliper (32) for mounting/removing the brake lining (44).

9. Disc brake according to one of the preceding claims, **characterized in that** a rim-side and/or a brake application-side brake lining (44, 46) are/is supported in the circumferential direction of the brake disc (68) tangentially with regard to the brake disc and/or radially with regard to the brake disc.

10. Disc brake according to one of the preceding claims, **characterized by** a U-shaped lining shaft for a rim-side brake lining (44) and/or a U-shaped lining shaft for a brake application-side brake lining (46).

## Revendications

1. Frein à disque, en particulier pour véhicule utilitaire, présentant :
une garniture de frein (44),
un support de frein (30) doté d'une première corne (38) de support de frein qui soutient la garniture de frein dans la direction périphérique du disque de frein (68) et
une selle de frein (32) maintenue à déplacement par rapport au support de frein et présentant au moins une découpe (40) en forme de poche ouverte radialement vers l'intérieur, qui reprend la première corne de support de frein et
un appendice (58) prévu sur le support de frein pour recouvrir la découpe radialement vers l'intérieur, **caractérisé en ce que**
en toute situation de fonctionnement l'appendice (58) déborde dans une direction parallèle à la direction de déplacement de la selle de frein (32) par rapport au support de frein (30) au-dessus de la surface intérieure de la paroi (64) qui délimite l'ouverture de la découpe (40) située radialement vers l'intérieur.

2. Frein à disque selon la revendication 1, **caractérisé en ce que** l'appendice (58) déborde en toute situation de fonctionnement dans la direction parallèle à la direction de déplacement de la selle de frein (32) par rapport au support de frein (30) au-dessus de la surface extérieure de la paroi (64) qui délimite l'ouverture de la découpe (40) située radialement vers l'intérieur.

3. Frein à disque selon les revendications 1 ou 2, **caractérisé en ce que** l'appendice (58) est situé du côté de la jante du support de frein (30).

4. Frein à disque selon l'une des revendications précédentes, **caractérisé en ce que** dans une vue en plan du support de frein (30), une surface d'enveloppe de l'appendice (58) recouvre au moins en partie une surface d'enveloppe de la selle de frein (32) et/ou déborde au moins en partie au-delà de la surface d'enveloppe de la selle de frein.

5. Frein à disque selon l'une des revendications précédentes, **caractérisé par** un interstice (62) situé entre l'appendice (58) et la paroi (64) et délimitant l'ouverture de la découpe (40) située radialement vers l'intérieur.

6. Frein à disque selon l'une des revendications précédentes, **caractérisé en ce que** l'appendice (58) est formé d'un seul tenant avec la première corne (38) du support de frein et/ou avec un étrier de liaison (56) qui relie la première corne du support de frein et la deuxième corne (36) de support de frein.

7. Frein à disque selon l'une des revendications précédentes, **caractérisé en ce que** le support de frein (30) et/ou la selle de frein (32) chevauchent le disque de frein (68) en forme d'encadrement.

8. Frein à disque selon l'une des revendications précédentes, **caractérisé par** une ouverture (48) prévue dans la selle de frein (32) en vue du montage et du démontage de la garniture de frein (44).

9. Frein à disque selon l'une des revendications précédentes, **caractérisé en ce qu'**une garniture de frein (44, 46) située du côté de la jante et/ou du côté du serrage du frein est soutenue dans la direction périphérique du disque de frein (68) tangentiellement par rapport au disque de frein et/ou radialement par rapport au disque de frein.

10. Frein à disque selon l'une des revendications précédentes, **caractérisé par** un puits à garniture en forme de U, pour une garniture de frein (44) située côté jante et/ou un puits à garniture en forme de U pour une garniture de frein (46) située côté serrage.
